Europäisches Patentamt

European Patent Office

Office européen des brevets

(11) Publication number: **0 489 478 A1**

# EUROPEAN PATENT APPLICATION

(21) Application number: **91203185.3**

(22) Date of filing: **04.12.91**

(51) Int. Cl.5: **B65G 47/32**, B65B 39/14

(30) Priority: **05.12.90 NL 9002671**

(43) Date of publication of application:
**10.06.92 Bulletin 92/24**

(84) Designated Contracting States:
**AT BE CH DE ES FR IT LI NL**

(71) Applicant: **AWETA B.V.**
**Burg. Winkellaan 3**
**NL-2631 HG Nootdorp(NL)**

(72) Inventor: **Ruigrok, Albertus Johannes**
**Westlaan 88**
**NL-2641 DP Pijnacker(NL)**

(74) Representative: **Smulders, Theodorus A.H.J.,**
**Ir. et al**
**Vereenigde Octrooibureaux, Nieuwe**
**Parklaan 97**
**NL-2587 BN Den Haag(NL)**

(54) Apparatus for placing articles on a conveyor.

(57) An apparatus for placing articles on a continuously moving conveyor in precisely spaced relationship and subsequently performing an operation on the articles utilizing at least one processing station moving in correspondence with the conveyor, wherein the articles are placed on a flat plate or the like disposed level or substantially level with the conveyor and are subsequently shifted onto the conveyor at a given frequency.

FIG.4

This invention relates to an apparatus for placing articles on a continuously moving conveyor in precisely spaced relationship and subsequently performing an operation on the articles utilizing at least one processing station moving in correspondence with the conveyor.

Such an apparatus is known from German Auslegeschrift 1137670 and European patent application 0 306 648. In this known apparatus the articles are disposed in a closed line on the continuously moving conveyor while at the leading end of the line periodically an article is removed and at the trailing end periodically an article is supplied.

The object of the present invention is to make an apparatus of the type described in the opening paragraph hereof suitable for processing mutually spaced articles disposed on a continuously moving conveyor, so that an operation can easily be performed on them from several sides.

To that end, an apparatus of the type described in the opening paragraph hereof is characterized in that the articles are placed on a flat plate or the like disposed level or substantially level with the conveyor and are subsequently shifted onto the conveyor at a given frequency.

The articles can be shifted onto the conveyor in the same direction as that of the conveyor.

The articles can moreover be shifted onto the conveyor at the same speed as the speed at which the conveyor moves.

This invention further relates to an apparatus comprising a supplying device for the articles, an endless conveyor and a flat plate or the like arranged therebetween, which plate is disposed level with or directly above the conveyor, while further a slide is provided which can be moved back and forth over the plate.

This slide can be driven by a crank-connecting rod mechanism or a slotted link gear, the motion pattern of which can be precisely set by means of a cam.

Another possibility of conveying the articles consists in the articles being shifted onto the conveyor by at least one carrier which can be moved above the flat plate.

If the continuously moving conveyor is divided into a several conveyors moving side by side, it is also possible to use carriers mounted on circulating drive means, arranged under the plate and the belts, and extending through slots in the plates and the belts.

The distance between the articles on the continuously moving conveyor can then be controlled by adjusting the speed of the conveyor.

Another option in controlling the distance between the articles on the conveyor can be accomplished by modifying the frequency at which the articles are shifted onto the conveyor.

It will be clear that for a proper positioning the coefficient of friction between the articles and the conveyor relative to the coefficient of friction between the articles and the flat plate must be relatively high.

According to another embodiment of the apparatus according to the invention, in which the conveyor consists of at least two ropes, use can be made of a vibrating device arranged at least at one of the processing stations, so that it is ensured that any products supplied come to lie in the package in stable manner.

Since subjecting a package with contents to a vibrating operation might lead to a shifting of the package, the vibrating device preferably cooperates with a carrier chain or the like, which retains the package in position during the vibrating operation.

In further elaboration of the invention, if the processing station is a filling station, the filling station may comprise elements which are pivotable downwards and outwards, of such dimensions that in the opened position they bridge the distance between the discharge opening of the filling station and the package. In this way it is ensured that the products always end up in the package.

The apparatus described is eminently suitable for supplying packages from a stack one by one, these packages serving for instance for the transport and sale of fruits, such a tomatoes and the like, in certain amounts of weight. Here, naturally use will be made of a filling station moving in correspondence with the conveyor.

For the sake of completeness, it is observed that European patent application 0 237 299 discloses an apparatus in which essentially three aligned conveyors are used, namely a first supply conveyor, a second transfer conveyor and a third discharge conveyor.

The transfer conveyor is very short in length and rotates at a variable speed by means of a costly drive system, which involves a great risk that even the slightest deviation will lead to incorrect positioning of the articles on the discharge conveyor. To avoid that, the known apparatus employs a suction unit which retains the article at the transfer conveyor. Moreover, there must always be a certain friction between the article and the conveyor.

To clarify the invention, some embodiments of an apparatus for depositing articles in precisely spaced relationship on a flat, continuously moving conveyor for packages will now be described, by way of example, with reference to the accompanying drawings, in which:

Fig. 1 is a schematic side elevation of a first embodiment of an apparatus for depositing packaging trays or containers on a conveyor in regularly spaced relationship;

Fig. 2 is a similar view of a second embodiment of the apparatus according to the invention;

Fig. 3 is a similar view of a third embodiment of the apparatus according to the invention;

Fig. 4 is a view similar to Figs 1-3 of a fourth embodiment of the apparatus according to the invention;

Fig. 5 is a detail of the apparatus according to Fig. 4 prior to discharge; and

Fig. 6 is a view similar to Fig. 5 after discharge.

Referring to the drawings, there is shown an apparatus for supplying packaging containers or trays 2 one by one, comprising a hopper with unstacking means 1. Such unstacking means are well known for instance from US patent specifications 4,909,412 and 4,361,263, and accordingly will not be further described in detail here. Arranged below the unstacking system 1 is a flat plate 3 which is mounted parallel to a conveyor 7 and level therewith or as closely as possible above it. The plate 3 may also be provided with slots or consist of pins or strips arranged side by side. Arranged for movement above the plate 3 is a shifting member or slide 4. The motion of the shifting member 4 is controlled by means of a rotary cam 5 which cooperates with a slotted link 6. Movement of the shifting member 4 effects the deposition of the supplied trays onto the conveyor 7. It will be clear that by modifying the speed of the conveyor or the frequency of operation of the shifting member 4, the intervals between the trays 2 on the conveyor 7 can be modified.

In this way it is ensured that each of the containers or trays 2 pass under a filling station 8 at precisely defined time intervals, where they can be filled with great speed with a particular amount of weight.

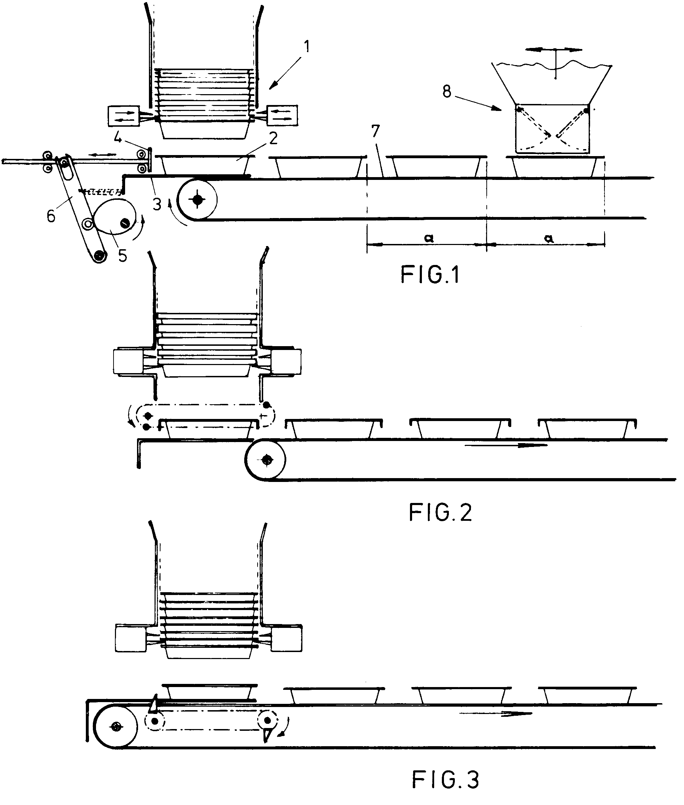

After the foregoing, the construction and operation of the apparatus shown in Figs 2 and 3 will also be clear. In the apparatus according to Fig. 2, no use is made of a shifting member 4, a cam 5 and a slotted link 6, but of circulating carriers, i.e. in the apparatus according to Fig. 2 the carriers are disposed above the level of the flat table and in the apparatus according to Fig. 3 they are disposed under the flat table. It will be clear that in the latter case both the conveyor and the flat plate comprise slots to allow the carriers to pass.

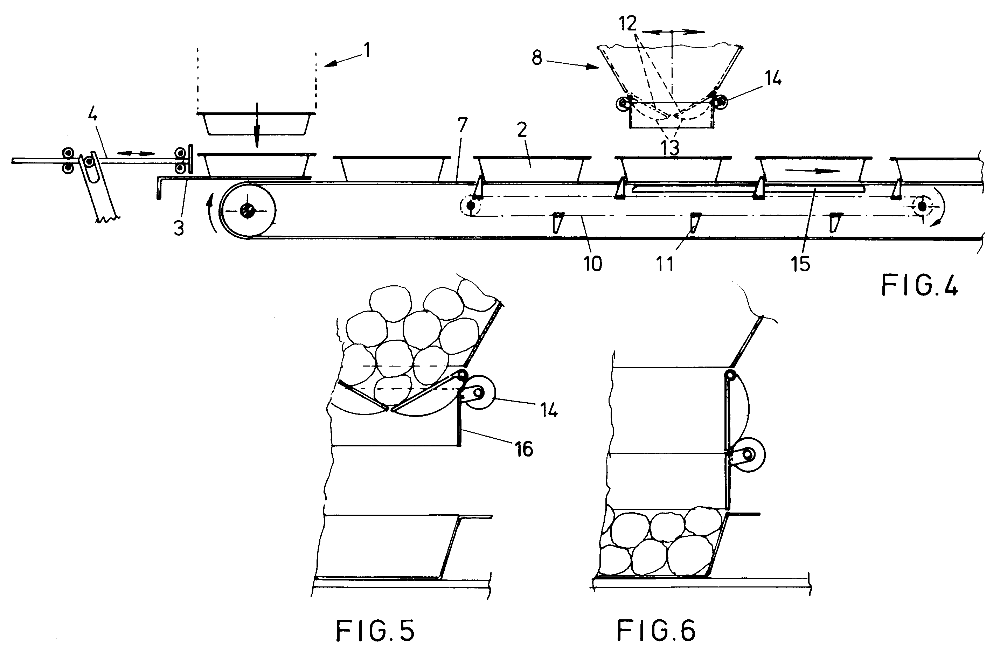

Like the apparatus shown in Fig. 1, the embodiment shown in Figs 4, 5, and 6 comprises an unstacking system 1, a flat plate 3 disposed parallel to a conveyor 7 and a shifting member or slide 4 arranged above the flat plate 3. In this case the conveyor 7 consists of a plurality of ropes. As is apparent from Fig. 4, a carrier chain 10 with carriers 11 is arranged at the filling station 8 under the top part of the conveyor 7. It is thus ensured that during filling the containers 2 are always properly positioned.

As has been indicated with a double arrow, the filling station 8 moves in correspondence with the packages 2 passing therebelow. To ensure that the products, for instance cherry tomatoes, are appropriately delivered into the package 2, the filling station is closed at the lower end by two valve halves 12 comprising guideways 13 on the outside thereof. The guideways can cooperate with following rollers 14 (see Figs 5 and 6 in particular), which can perform a downward motion during operation. Coupled to the following rollers 14 are guide plates 16 of such length that in the filling position of the filling station 8 the guide plates 16 bridge the space between the valve halves 12 and the upper edge of the container 2, so that it is ensured that the products are discharged into the container and not laterally thereof.

It will be clear that the valve halves are under spring pressure, namely in the opening direction of the valve.

To prevent bulging of the rope-shaped conveyor 7 during filling, a plurality of support strips 15 are provided adjacent the conveyor 7 below the filling station 8.

It will be clear that within the framework of the invention, a large number of modifications are possible. For instance, if necessary, the filling station could be adapted to carry out a vertical movement in addition to a horizontal movement during conveyance so as to minimize the distance between the filling station and the container.

## Claims

1. An apparatus for placing articles on a continuously moving conveyor in precisely spaced relationship and subsequently performing an operation on said articles utilizing at least one processing station moving in correspondence with the conveyor, characterized in that the articles are placed on a flat plate or the like disposed level or substantially level with the conveyor and are subsequently shifted onto the conveyor at a given frequency.

2. An apparatus according to claim 1, characterized in that the shift from the flat plate onto the continuously moving conveyor occurs in the direction of travel of the continuously moving conveyor.

3. An apparatus according to claim 1 or 2, characterized in that the shift occurs at a speed which is at least equal to that of the continuously moving conveyor.

4. An apparatus according to claim 1, 2, or 3, characterized by a supplying device for articles, a continuously rotating conveyor and a flat plate or the like disposed directly above or level with the conveyor.

5. An apparatus according to claim 4, characterized in that above the flat plate a slide is arranged which is driven by means of a slotted link gear, the motion pattern of which can be precisely set by means of a cam.

6. An apparatus according to claim 4, characterized in that the slide is driven by means of a crank-connecting rod mechanism.

7. An apparatus according to claim 4, characterized in that the articles can be shifted onto the conveyor by means of at least one carrier which is movable above the flat plate.

8. An apparatus according to claim 4, in which the continuously moving conveyor is divided into several conveyors moving side by side, characterized in that the articles can be displaced by means of carriers which are arranged under the plate and the conveyors and are mounted on circulating drive means, the carriers extending through slots in the plates and between the conveyors.

9. An apparatus according to one or more of claims 4-8, characterized in that the distance between the articles can be modified by modifying the speed of the conveyor.

10. An apparatus according to one or more of claims 4-8, characterized in that the distance between the articles can be varied by modifying the shifting frequency.

11. An apparatus according to one or more of claims 4-10, characterized in that the coefficient of friction between the articles and the conveyor relative to the coefficient of friction between the articles and the flat plate is relatively high.

12. An apparatus according to one or more of the preceding claims, in which the articles are packages and the conveyor consists of at least two ropes, characterized in that a vibrating device is arranged at one of the processing stations.

13. An apparatus according to claim 12, characterized in that the vibrating device cooperates with a carrier chain or the like, which retains the package in position during operation.

14. An apparatus according to one or more of the preceding claims, in which the processing station is a filling station, characterized in that the filling station comprises elements which can be pivoted downwards and outwards, of such dimensions that in the opened position they bridge the distance between the discharge opening of the filling station and the package.

15. An apparatus according to claim 14, characterized in that the pivotable elements cooperate with vertically movable guide plates which operate said elements through cooperation of a roller and a cam and are in register with the package in the lower position.

FIG.1

FIG.2

FIG.3

FIG.4

FIG.5

FIG.6

EP 0 489 478 A1

European Patent
Office

**EUROPEAN SEARCH REPORT**

Application Number

EP    91 20 3185

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 084 763 (CAVANNA)<br><br>* abstract; figures * | 1-4,7,<br>12,13 | B65G47/32<br>B65B39/14 |
| Y | EP-A-0 306 648 (OSTMA)<br><br>* column 3, line 53 - column 4, line 21; figures 1,2 * | 1-4,7,<br>12,13 | |
| A | EP-A-0 001 967 (FOCKE & CO.)<br>* page 11, line 14 - line 27; figures 1,3 * | 1-10 | |
| A | DE-A-2 906 150 (C. KELLER GMBH)<br>* page 5, line 24 - page 7, line 10; figures * | 1-8,11 | |
| A | FR-A-2 192 964 (CORAZZA)<br>* page 4, line 22 - page 5, line 16; figure 1 * | 1-6,9-11 | |
| A | DE-A-3 151 997 (O.C.M.E.)<br><br>* page 10, line 26 - page 11, line 9; figures * | 1,2,4,<br>7-10 | |
| A | DE-B-1 137 670 (FR. HESSER)<br>* column 3, line 40 - column 4, line 28; figures *<br><br>--- | 1,12-15 | TECHNICAL FIELDS SEARCHED (Int. Cl.5 )<br><br>B65G<br>B65B<br>B65D |
| A | US-A-4 844 291 (FUSS)<br><br>* abstract; figures 1,5,6 * | 1,12,14,<br>15 | |
| A | GB-A-148 845 (WEDEKIND)<br>* page 1, line 23 - line 49; figure 1 * | 14,15 | |

The present search report has been drawn up for all claims

| Place of search | Date of completion of the search | Examiner |
|---|---|---|
| THE HAGUE | 13 MARCH 1992 | NEVILLE D.J. |